# EUROPÄISCHE PATENTSCHRIFT

(11) **EP 1 025 170 B1**
(45) Veröffentlichungstag und Bekanntmachung des Hinweises auf die Patenterteilung: **22.12.2004**
(21) Anmeldenummer: 98961108.2
(22) Anmeldetag: 28.10.1998
(51) Int. Cl.: C09D 5/03, B29B 17/00, C08J 11/00

(54) **VERFAHREN ZUR AUFBEREITUNG VON PULVERLACKABFÄLLEN UND DIE ERHALTENEN PULVERLACKE**
METHOD FOR PROCESSING COATING POWDER WASTE AND COATING POWDERS THUS OBTAINED
PROCEDE POUR TRAITER DES DECHETS DE POUDRE DE REVETEMENT ET POUDRES DE REVETEMENT AINSI OBTENUES

(30) Priorität: 31.10.1997 DE 19748159
(43) Veröffentlichungstag der Anmeldung: 09.08.2000
(73) Patentinhaber: E.I. DU PONT DE NEMOURS & COMPANY INCORPORATED, Wilmington, Delaware 19898 (US)
(72) Erfinder: BLATTER, Karsten, D-50374 Erftstadt (DE); MONTGOMERY, David, D-50997 Köln (DE); BOLM, Heléne, S-593 36 Västervik (SE)
(74) Vertreter: Gille Hrabal Struck Neidlein Prop Roos
(86) Internationale Anmeldenummer: PCT/EP1998/006844
(87) Internationale Veröffentlichungsnummer: WO 1999/023068

(56) Entgegenhaltungen:
- EP-A- 0 636 422
- WO-A-95/34606
- WO-A-96/15891
- PATENT ABSTRACTS OF JAPAN vol. 098, no. 002, 30. Januar 1998 & JP 09 276754 A (TSUTSUI KOGYO KK), 28. Oktober 1997

## Beschreibung

Die Erfindung betrifft ein Verfahren zur Aufbereitung und Wiederverwendung von vermahlenen Pulverlackabfällen, bei denen es sich um Nebenprodukte bei der Pulverlackherstellung oder um das Overspray bei der Pulverlackapplikation handeln kann, zur Herstellung von Pulverlacken ohne Qualitätsverlust.

Vernetzbare Pulverlacke stellen eine umweltfreundliche Alternative zu leisungsmittelhaltigen Flüssiglacksystemen dar, da bei der Applikation keine Lösungsmittelemissionen auftreten. Der Einsatz von Pulverlacken hat aus diesem Grund in den letzten Jahren stark zugenommen.

Vernetzbare Pulverlacke bestehen üblicherweise aus einem oder mehreren polymeren Bindemitteln, Härtern, Pigmenten und Füllstoffen sowie Additiven. Die Herstellung eines Pulverlacks läßt sich in folgende Verfahrensschritte aufteilen:
1. Die Bestandteile des Pulverlacks werden als Feststoffe in den erforderlichen Mengenverhältnissen trocken intensiv vorgemischt.
2. Die Mischung wird in einem Extruder bei möglichst niedriger Temperatur zur Vermeidung einer vorzeitigen Vernetzung aufgeschmolzen und intensiv durchmischt. Dabei werden Bindemittel und Härter plastifiziert und benetzen die Pigmente und Füllstoffe.
3. Das erhaltene, gegebenenfalls gefärbte Extrudat wird in eine dünne Schicht ausgewalzt, abgekühlt und in ein grobes Granulat gebrochen.
4. Das Granulat wird in einer Mühle zum fertigen Pulverlack vermahlen.

In der Regel wird der im Mahlprozeß nicht vermeidbare Feinanteil mit Partikelgreißen < 10 *µ*m in einem anschließenden Sichtungsprozeß entfernt. Das erhaltene Pulver hat typischerweise eine mittlere Partikelgröße von 40 bis 70 *µ*m.

Die Herstellung von Pulverlacken erfolgt in der Regel chargenweise. Übliche Zusammensetzungen sowie das klassische Herstellungsverfahren für Pulverlacke sind beispielsweise in der Monographie "The Science of powder coatings" Volume 1 und 2 (Herausgeber D.A. Bate, London 1990) beschrieben.

Ziel des Mahlprozesses ist die Herstellung eines Pulvers mit einer engen partikelgrößenverteilung und einem möglichst geringen Feinanteil < 10 um. da sich ein hoher Feinanteil negativ auf die Verarbeitbarkeit des Pulverlackes im elektrostatischen Sprühverfahren auswirkt. In der Regel wird daher ein Pulver mit einer mittleren Partikelgröße von 40 bis 70 *µ*m hergestellt und der Feinanteil unter 10 *µ*m durch geeignete Verfahren, z.B. mit Hilfe eines Zyklons abgetrennt. Dieser Feinanteil beträgt üblicherweise ca. 2 bis 5 Gew.-%. Wird die mittlere Partikelgröße des Pulvers verkleinert, was aus technischer Sicht häufig bevorzugt wird. so steigt der Feinanteil mit Partikelgrößen < 10 *µ*m stark an, da im Mahlprozeß immer eine relativ breite Partikelgrößenverteilung erhalten wird.

Pulverlacke mit einer niedrigen mittleren Partikelgröße und einer engen Verteilung des Kornspektrums sind beispielsweise für die Herstellung dünner Lackschichten wünschenswert (B. Fawer, Powder Coating, October 1996, S. 56).

Der Feinanteil aus dem Mahlprozeß stellt somit ein Nebenprodukt der Pulverlackherstellung dar, das in vielen Fällen als industrieller Abfall entsorgt werden muß. Außerdem gibt es weitere Rückstände oder Abfälle aus der Pulverlackproduktion oder Verarbeitung, die vernichtet oder rezyklisiert werden müssen. Beispiele für solche Rückstände sind zu grobe Komanteile, Rückstände aus der Sprühanwendung, Fehlchargen und auch Reste von nicht verkauften Mengen.

In der DE 4028567 A1 wird die Rückführung des bei der Anwendung von Pulverlacken anfallenden Oversprays und dessen Vermischung mit den Ausgangsmaterialien für eine neue Pulverlackcharge beschrieben. Dort wird dann diese Mischung über die üblichen Extruder weiterverarbeitet. Dabei werden die Bestandteile, insbesondere auch der Overspray. thermisch aufgeschmolzen und belastet. Dieses Verfahren hat den Nachteil, daß die homogene Vermischung aufgrund der geringen Partikelgröße des Oversprays schwierig ist, es zu Problemen mit dem Einzug der Mischungen in den Extruder kommt und gegebenenfalls Anteile des entstehenden Pulverlackes mehrfach thermisch belastet werden.

Die WO 96/15891 beschreibt ein Verfahren, welches das Problem der Dosierung und Zuführung von Feinanteil umgeht, indem das Feinpulver in einer Tablettenpresse kompaktiert wird. Die erhaltenen Tabletten werden dann mit den übrigen Ausgangsstoffen für eine neue Pulverlackcharge vermischt und in den Extruder eingeführt. Als eine wesentliche Bedingung für die Kompaktierung wird festgestellt, daß die ursprünglichen Partikel in den Tabletten "im wesentlichen noch erkennbar" sein müssen.

Die EP 0 683 199 A2 beschreibt ein Verfahren zur Rückführung von Feinanteilen in die Ausgangsmischung bei der Pulverlackherstellung vor dem Extrusionsschritt durch thermisches Zusammensintern des Pulvers, indem die Feinanteile auf einer Fläche verteilt. dort zusammengebacken werden, und dann als größere Partikel der Ausgangsmischung in geeigneter Menge zudosiert werden können.

Allen diesen bekannten Verfahren ist gemeinsam, daß die Rückführung des Feinanteils oder der Pulverreste in den ersten Schritt der Pulverlackherstellung erfolgt. Das Material muß also den gesamten Pulverlackproduktionsprozeß erneut durchlaufen. Diese Vorgehensweise hat den prinzipiellen Nachteil, daß das Material im Extruder erneut aufgeschmolzen und thermisch belastet wird. Da es sich bei Pulverlacken in vielen Fällen um thermisch vernetzende Systeme handelt, führt eine wiederholte Extrusion zu Qualitätsverlusten im Pulverlack, besonders wenn ein hoher Anteil an Feinanteil eingesetzt wird. Darüber hinaus stellt die Einmischung in die Ausgangsmaterialien einer neuen Charge ein logistisches Problem dar da die Feinanteile nur mit gleicher Rezeptur eingearbeitet werden können. In vielen Fällen wird die gleiche Rezeptur nur in unregelmäßigen Abständen hergestellt. so daß der Feinanteil separat gelagert werden muß. Für solche Rezepte, die nur sehr selten hergestellt werden, ist ein Recycling nach den bisher beschriebenen Verfahren daher nicht wirtschaftlich.

Gemäß DE-C 19703376 wird ein Verfahren zur Wiederverwendung von bei der Herstellung durch Vermahlen oder als Overspray angefallenen Feingut-Pulverlackresten beschrieben, bei dem die Pulverlackreste agglomerisiert werden und in den Herstellungsprozeß der gleichen Pulverlacke zurückgeführt werden. Es kann dabei gegebenenfalls auf den Extrusionsschritt verzichtet werden und eine direkte Vermahlung zu wiedereinsetzbaren Pulverlacken erfolgen.

Aufgabe der Erfindung ist daher die Bereitstellung eines vereinfachten Verfahrens zur Aufbereitung von vermahlenen Pulverlackabfällen, das deren Wiederverwertung ermöglicht. Das Verfahren soll zu einem homogenen, in der Qualität unverminderten Pulverlack führen. Es soll die Möglichkeit der Erzielung von Farbabmischungen unter Erzielung gewünschter Farbtöne ergeben.

Es wurde gefunden, daß diese Aufgabe gelöst werden kann durch das einen Gegenstand der Erfindung darstellende Verfahren zur Aufbereitung von vermahlenen Pulverlackabfällen durch Kompaktieren der Pulverlackabfälle ohne völliges Aufschmelzen zu einem zusammengesinterten Produkt, wobei verschiedenartige Pulverlackreste oder unterschiedliche Pulverlackreste und reguläre Pulverlacke ohne Extrusionsbehandlung zu Pulverlacken vermahlen werden.

Einen weiteren Gegenstand der Erfindung bilden die beim erfindungsgemäßen Verfahren erhältlichen Pulverlacke.

Nach dem erfindungsgemäßen Verfahren können verschiedenartige Pulverlackreste verwendet werden. Verschiedenartige Pulverlackreste können insbesondere Pulverlackreste mit unterschiedlicher Färbung und/oder Pulverlackreste mit unterschiedlicher chemischer Zusammensetzung sein.

In einem ersten Schritt werden die Pulverlackabfälle abgetrennt, homogen vermischt und kompaktiert.

Danach werden in einem zweiten Schritt die entstehenden zusammengesinterten Produkte, z.B. in Form von groben Granulaten vermahlen. Das kompaktierte Material zerfällt dabei nicht wieder in die ursprünglich vorhandenen feinen Partikel.

Die aus dem erfindungsgemäßen Pulver erhaltenen Beschichtungen unterscheiden sich in der Qualität nicht von handelsüblichen Pulverbeschichtungen.

Bei der Herstellung von Pulverlacken werden die Farbpigmente im allgemeinen vor der Extrusion als Pulver zugesetzt oder es werden sogenannte Masterbatche zugesetzt. Ein nachträgliches Untermischen von Pigmenten erweist sich als schwierig. da eine Homogenität sichergestellt werden muß und auch nachträglich keine Separation auftreten darf.

Überraschenderweise wurde gefunden, daß die Kompaktierung von verschieden gefärbten Feinpulvern mit einer Partikelgnöße < 10 *µ*m und die anschließende Vermahlung die Herstellung von Pulvern mit einer einheitlichen Farbe erlaubt. Dabei können unterschiedliche Farbchargen von Pulverlack-resten am besten vor dem Kompaktieren homogen gemischt werden. Man erhält einen einheitlichen Pulverlack, der nach der Applikation eine Beschichtung ergibt, in der die unterschiedlichen Farben der eingesetzten Feinpulver vom menschlichen Auge nicht mehr unterschieden werden können. Diese Arbeitsweise läßt die Verwendung von Feinanteilen sowohl aus der Pulverlackherstellung als auch aus der Pulverlackverarbeitung mit unterschiedlichen Farbtönen zur Herstellung hochwertiger Produkte zu. Die Lagerhaltung und Logistik für eine Wiederverwendung von unterschiedlichen Farbchargen von Pulverlackresten wird deutlich vermindert.

In einer weiteren Ausführungsform des erfindungsgemäßen Verfahrens können geringe Mengen an gefärbtem Feinpulver mit regulärem Pulverlack, der eine andere Farbe haben kann, gemischt und kompaktiert werden. Das so erhaltene Pulver ergibt wiederum eine farblich einheitliche Beschichtung. in der die Farhunterschiede der eingesetzten Partikel durch das menschliche Auge nicht festgestellt werden können. Da ein erneutes Extrudieren und Aufschmelzen der Pulverlacke nicht erfolgt, kann somit auf schonende Art und Weise eine nachträgliche Anpassung oder Veränderung von Farben von Pulverlacken durchgeführt werden. Es ist daher möglich, eine Nuancierung von Pulverlacken durchzuführen. Das ist insbesondere auch dann möglich, wenn infolge von Produktionsschwankungen einzelne Chargen einen abweichenden Farbton aufweisen.

Es kann vorzugsweise eine Menge von bis zu 10 Gew.-% eines farbigen Pulverlackes bzw. Pulverlackrestes mit einem mittleren Teilchendurchmesser kleiner 10 *µ*m mit einem andersfarbigen üblichen Pulverlack gemischt und erfindungsgemäß verarbeitet werden.

Das ertindungsgemäße Verfahren ermöglicht es auch, aus einem Klarlack verschiedene Chargen gleicher Zusammensetzung, aber mit unterschiedlichem Farbton herzustellen.

Die vorgehend beschriebene Arbeitsweise ermöglicht es ebenfalls, bei Bedarf Pulverlacke zu modifizieren. indem zu einem Pulverlack eine Menge eines vermahlenen, z. B. Additive enthaltenden, anderen Pulverlackanteils zugemischt wird und dieses Gemisch dann entsprechend dem erfindungsgemäßen Verfahren weiterverarbeitet wird. Beispielsweise können auch Pulverklarlacke auf diese Weise mit Additiven nachträglich modifiziert werden.

Die zu kompaktierenden Feinanteile und/oder Pulverreste müssen nicht homogen zusammengesetzt sein, und nur aus Feinanteilen mit kleinem Korngrößendurchmesser bestehen.

Mit dem erfindungsgemäßen Verfahren kann auch Pulver einer anderen Partikelgröße, z.B. einer mittlerer Partikelgröße von 10 bis 300 *µ*m, ohne Probleme kompaktiert und erneut vermahlen werden. Es ist beispielsweise die Aufarbeitung von Chargen möglich, die aufgrund von Unregelmäßigkeiten beim Betrieb der Mühlen kein spezifikationsgerechtes Kornspektrum aufweisen, z.B. Fehlchargen. Bevorzugt beträgt die Korngröße der eingesetzten Pulverlackabfälle bis zu 250 µm.

Ebenso ist es möglich zu den oben erwähnten Feinanteilen auch Anteile von Ebenso ist es möglich zu den oben erwähnten Feinanteilen auch Anteile von Überkorn, d.h. nicht ausreichend vermahlenen Pulvern, zuzusetzen.

Darüber hinaus kann auch Pulverlackoverspray aus der Sprühanwendung sowie nicht verkaufte Pulverlackreste verwendet werden.

Derartige Rückstände können anteilig zugesetzt werden oder sie werden allein nach dem erfindungsgemaßen Verfahren verarbeitet.

Vorzugsweise wird der bei der Pulverlackherstellung oder als Pulverlackoverspray anfallende Feinanteil verwendet.

Beispielsweise kann mit dem erfindungsgemäßen Verfahren eine Partikelgrößenverteilung erreicht werden, bei welcher mindestens 50 Volumenprozent der erzielten Pulverlackteilchen eine Partikelgröße von beispielsweise 30 bis 40 *µ*m aufweisen (d 50), wobei der Anteil von Teilchen mit einer Partikelgröße < 10 *µ*m unter 15 % liegen kann.

Durch das erfindungsgemäße Verfahren können z.B. abgetrennte Pulverlack-Feinanteile unterschiedlicher Lackzusammensetzung, gegebenenfalls auch zusammen mit anderen vermahlenen Pulverlackanteilen, so kompaktiert werden, daß beim Kompaktiervorgang ein festes Zusammenhaften der Feinanteile erfolgt durch Zusammensintern der Körner, worauf das kompaktierte Material direkt in den Mahlprozeß bei der Pulverlackherstellung eingeführt werden kann, wobei diese im wesentlichen beim Vermahlen nicht wieder in die alten Feinanteile zerfallen. Das kompaktierte Material kann direkt in den in der Pulverlackindustrie üblichen Mühlen zu einem Pulver vermahlen werden, das sich im Kornspektrum nicht wesentlich von einem üblichen Pulverlack unterscheidet und ohne Schwierigkeiten zu einer Pulverlackbeschichtung verarbeitet werden kann.

Im allgemeinen ist es bevorzugt. Pulverlackabfälle, wie Überkorn. Feinanteil. Applikationsreste, Fehlchargen, von ähnlicher bzw. gleicher chemischer Zusammensetzung zu mischen, d.h. eine Verträglichkeit ist sichergestellt und ebenfalls eine einheitliche Vernetzung, z.B. Epoxidsysteme, Polyestersysteme. Polyurethansysteme oder Acrylatsysteme untereinander. Im besonderen ist es jedoch ebenfalls möglich, auch Pulverlackabfälle unterschiedlicher Zusammensetzung zu mischen, z.B. Polyester und Epoxidsysteme. In diesem Fall ist jedoch die Verträglichkeit der Harze miteinander zu testen, um Fehler in der Beschichtung zu vermeiden.

Das erfindungsgemäße Verfahren kann für beliebige Pulverlacke eingesetzt werden. z.B. für Pulverklarlacke und/oder farbige Pulverlacke beispielsweise auf der Basis von Epoxid-, Polyester-, Polyurethan- oder Acrylatharzen.

Die Kompaktierbedingungen können abhängig vom eingesetzten Pulverlacktyp gewäht werden. Ist die Kompaktierung schwach, wie dies beispielsweise beim Verfahren bei der Herstellung von Tabletten analog zu der WO 96/15891 beabsichtigt ist, so zerfällt das kompaktierte Material in der Mühle wieder in das eingesetzte Feinpulver. Wird das Material zu stark kompaktiert, so kommt es zu einer starken Aufwärmung durch die Reibungshitze, die zu einem weitgehenden Aufschmelzen des Pulvers führt. Das geschmolzene Pulver haftet stark an den Kompaktiervorrichtungen und läßt sich nur mit hohem Aufwand wieder entfernen. Außerdem ist die thermische Belastung sehr hoch, so daß eine Qualitätsbeeinträchtigung der entstehenden Pulverlacke möglich ist. Die Kompaktierung soll nach dem erfindungsgemäßen Verfahren so erfolgen, daß ein Zusammensintern der Feinanteile erfolgt ohne völliges Aufschmelzen der Pulverkörner, und die gesinterten Teile beim Vermahlen in neue Kornstrukturen aufgebrochen werden.

Die optimalen Kompaktierbedingungen hängen sowohl vom eingesetzten Pulverlack als auch von der Kompaktiervorrichtung ab. Bei der Kompaktierung entsteht an der Oberfläche der Walzpressen eine erhöhte Temperatur, die zum Sintern oder Verbacken der Pulverkörner führt. Im Fall bei niedriger Temperatur vernetzenden Pulverlacken kann z.B. die Verarbeitungskraft so eingestellt werden, daß die einzelnen Pulverkörner gut zusammensintern aber nicht aufschmelzen. Für bei höheren Temperaturen vernetzende Puverlacke kann z.B. die Kraft und damit auch die sich ergebende Temperatur höher eingestellt werden. Gegebenenfalls ist es möglich die Kompaktiervorrichtungen auch mit einer externen Heizung oder Kühlung zu versehen, z.B. können die Walzen mit Wasser gekühlt werden.

Grundsätzlich sind alle bekannten Kompaktiervorrichtungen wie Kolbenpressen. Kolbenstrangressen, insbesondere Zweiwalzenpressen oder Ringwalzenpressen für das erfindungsgemäße Verfahren geeignet. Dabei wird die Preßkraft bei den Walzenpressen einerseits durch den Spalt, durch die Umdrehungsgeschwindigkeit und die zugeführte Materialmenge bestimmt. Die Parameter können gut aufeinander abgestimmt werden. Die Preßkraft wird als spezifische Preßkraft angegeben, als N pro cm Walzenbreite. Im allgemeinen soll die spezifische Preßkraft oberhalb von 4 kN/cm liegen. insbesondere ist ein Wert von über 6 kN/cm günstig. Beispielsweise liegen die spezifischen Preßkräfte im Bereich von 10 bis über 30 kN/cm und bis zu 100 kN/cm. Eine zu hohe Preßkraft ist am weitgehenden Aufschmelzen der Pulver zu erkennen, d.h. die Masse zieht Fäden und klebt an den Walzen. Zu niedrige Preßkräfte führen zu einem stark erhöhten Feinanteil im Mahlprozeß. Zweiwalzenpressen mit strukturierten Oberflächen haben sich als besonders geeignet erwiesen, solche mit tablettenförmigen Vertiefungen sind weniger geeignet als entsprechende mit geriffelter Oberfläche. Bevorzugt weisen die Zwei-Walzen - oder Ringwalzenpressen eine Preßkraft zwischen 5 und 50 kN/cm auf.

Falls beim Kompaktieren ein Produkt erhalten wird, das aufgrund seiner Abmessungen nicht für einen Mahlvorgang geeignet ist, kann das Produkt gebrochen werden, z.B. unter Bildung von Chips oder Granulaten. Das Brechen kann mit üblichen zur Pulverlackherstellung verwendbaren Vorrichtungen durchgeführt werden, z.B. mit sogenannten Fingerbrechem.

Der anschließende Mahlvorgang wird mit üblichen bei der Pulverlackherstellung verwendbaren Vorrichtungen durchgeführt. z.B. mit Prallmühlen oder Sichtermühlen. die eine schonende Herstellung der Lackpulver ermöglichen. Hierdurch ergibt sich der weitere Vorteil des erfindungsgemäßen Verfahrens, der darin liegt. daß die Aufbereitung teilweise innerhalb der üblichen Pulverlackherstellung erfolgt und keinerlei zusätzlicher Mahleinrichtungen bedarf. Die aus dem kompaktierten Granulat entstehenden Pulverlacke weisen einen vergleichbaren Feinanteil auf wie übliche Pulverlacke, er liegt beispielsweise normalerweise unterhalb 25 % Feinanteil, gegebenenfalls auch kleiner 15 %.

Die erfindungsgemäße Arbeitsweise stellt ein Verfahren zur Verfügung, das die Nachteile des bekannten Standes der Technik bei der Wiederaufarbeitung von Feinpulvern und anderen Pulverlackabfällen, insbesondere zusätzliche Erhitzungs- bzw. Aufschmelzschritte, vermeidet. Weiterhin werden die Lagerhaltungen von Feinanteilen oder Pulverlackresten aus der Applikation verringert. Der insbesondere bei der Pulververarbeitung anfallende Fein- und Restanteil kann nach der erfindungsgemäßen Verfahrenweise durch Kompaktierung und Mahlung in ein qualitativ hochwertiges Pulver aufgearbeitet werden, ohne daß ein Extrusionsschritt erforderlich ist. Sowohl das Komspektrum des erhaltenen Pulvers, als auch die Qualität der aus dem Pulver hergestellten Beschichtungen unterscheiden sich nicht von den üblichen Pulverlacken. Zusätzlich bietet die erfindungsgemäße Arbeitsweise die Möglichkeit auch vom Farbton her defekte Fehlchargen zu marktfähigen, hochwertigen, farbtongerechten Pulverlacken zu verarbeiten.

Die nachfolgenden Beispiele verdeutlichen die Erfindung. Die Preßkraft der Walzen wird als spezifische Preßkraft pro cm Walzenbreite (kN/cm) angegeben.

### Beispiel 1

18 kg Feinanteil < 10 *µ*m (mittlere Korngröße ca. 4 *µ*m) aus der Mahlung eines üblichen thermisch vernetzbaren weißen Pulverlacks auf Basis Epoxy/Polyester Hybrid (49 % Polyester, 21 % Epoxid, 29 % Titandioxid und 1 % Additive) werden mit Hilfe eines Zwei-Walzenkompaktors der Fa. Bepex unter Einsatz einer oberflächenstrukturierten Walze mit einem Durchsatz von ca. 25 kg/h mit einer Preßkraft von 8 kN/cm kompaktiert. Der so erhaltene kompaktierte homogene Strang. der mechanisch stabil ist, wurde in einem Brecher in Chips von ca. 2 cm Durchmesser zerkleinert. Diese Chips werden in einer Mühle (Hersteller Hosokava, Typ ACM 2) unter den für Pulverlacke üblichen Bedingungen vermahlen. Man erhält ein Pulver mit einer mittleren Partikelgröße von 45 *µ*m und einem Anteil < 10 *µ* von < 15 %.

Das Pulver wurde elektrostatisch mit einer Koronapistole auf Aluminiumblech gesprüht und 20 min. bei 180°C eingebrannt. Man erhält eine defektfreie Beschichtung mit Eigenschaften, die sich nicht von einer Beschichtung unterscheiden, die direkt mit dem oben erwähnten nicht kompaktierten Pulverlack erhalten wird.

### Beispiel 2

16 kg Feinanteil < 10 *µ*m (mittlere Korngröße ca. 4 *µ*m) aus der Mahlung eines schwarz eingefärbten thermisch vernetzbaren Pulverlacks auf Basis Epoxid mit Dicyan Vemetzer werden mit Hilfe eines Zwei-Walzenkompaktors der Fa. Bepex unter Einsatz einer oberflächenstrukturierten Walze mit einem Durchsatz von ca. 22 kg/h und einer Preßkraft von 14 kN/cm kompaktiert. Der so erhaltene kompaktierte homogene Strang, der mechanisch stabil ist, wurde in einem Brecher in Chips von ca. 2 cm Durchmesser zerkleinert. Diese Chips werden in einer Mühle (Hersteller Hosokava, Typ ACM 2) unter den für Pulverlacke üblichen Bedingungen vermahlen. Man erhält ein Pulver mit einer mittleren Partikelgröße von 37 *µ*m und einem Anteil < 10 *µ* von < 14 %.

Das Pulver wurde elektrostatisch mit einer Koronapistole auf Aluminiumblech gesprüht und 20 min. bei 180°C eingebrannt. Man erhält eine defektfreie Beschichtung mit Eigenschaften, die sich nicht von einer Beschichtung mit dem nicht aufgearbeiteten Pulver unterscheiden.

### Beispiel 3

20 kg Feinanteil < 10 *µ*m (mittlere Korngröße ca. 4 *µ*m) aus der Mahlung eines üblichen thermisch vernetzbaren Pulverlacks auf Basis Polyester mit Triglycidylisocyanurat (TGIC) als Vernetzer (55.8 % Polyester, 4.2 % TGIC. 29 % Titandioxid und 1 % Additive) werden mit Hilfe eines Zwei-Walzenkompaktors der Fa. Bepex unter Einsatz einer oberflächenstrukturierten Walze mit einem Durchsatz von ca. 20 kg/h mit einer Preßkraft von 20 kN/cm kompaktiert. Der so erhaltene kompaktierte homogene Strang, der mechanisch stabil ist. wurde in einem Brecher in Chips von ca. 2 cm Durchmesser zerkleinert. Diese Chips werden in einer Mühle (Hersteller Hosokava, Typ ACM 2) unter den für Pulverlacke üblichen Bedingungen vermahlen. Man erhält ein Pulver mit einer mittleren Partikelgröße von 27 *µ*m und einem Anteil < 10 *µ* von < 25 %.

Das Pulver wurde elektrostatisch mit einer Koronapistole auf Aluminiumblech gesprüht und 20 min. bei 180°C eingebrannt. Man erhält eine defektfreie Beschichtung mit Eigenschaften, die sich nicht von einer Beschichtung mit dem nicht kompaktierten Pulverlack unterscheiden.

### Beispiel 4

16 kg Feinanteil < 10 *µ*m (mittlere Korngröße ca. 4 *µ*m) aus der Mahlung eines grau eingefärbten mit Wachs modifizierten thermisch vernetzbaren Pulverlacks auf Basis Epoxid mit Dicyan als Härterkomponente werden mit Hilfe eines Zwei-Walzenkompaktors der Fa. Bepex unter Einsatz einer oberflächenstrukturierten Walze mit einem Durchsatz von ca. 27 kg/h und 16 kN/cm Preßkaft kompaktiert. Der so erhaltene kompaktierte homogene Strang. der mechanisch stabil ist. wurde in einem Brecher in Chips von ca. 2 cm Durchmesser zerkleinert. Diese Chips werden in einer Mühle (Hersteller Hosokava, Typ ACM 2) unter den für Pulverlacke üblichen Bedingungen vermahlen. Man erhält ein Pulver mit einer mittleren Partikelgröße von 36 *µ*m und einem Anteil < 10 *µ* von < 20 %.

Das Pulver wurde elektrostatisch mit einer Koronapistole auf Aluminiumblech gesprüht und 20 min. bei 180° C eingebrannt. Man erhält eine defektfreie Beschichtung mit Eigenschaften, die sich nicht von einer Beschichtung direkt mit dem Pulverlack unterscheiden.

### Beispiel 5

10 kg Feinanteil < 10 *µ*m (mittlere Korngröße ca. 4 *µ*m) aus der Mahlung verschieden eingefärbter Epoxid-Pulverlacke (rot, weiß, gelb und grau) werden gemischt und mit Hilfe eines Walzenkompaktors der Fa. Bepex unter Einsatz einer oberflächenstrukturierten Walze mit einem Durchsatz von ca. 27 kg/h und 7 kN/cm Preßkraft kompaktiert. Der so erhaltene kompaktierte homogene Strang, der mechanisch stabil ist und eine einheitliche, altrosa Farbe ausweist, wurde in einem Brecher in Chips von ca. 2 cm Durchmesser zerkleinert. Diese Chips werden in einer Mühle (Hersteller Hosokava, Typ ACM 2) unter den für Pulverlacke üblichen Bedingungen vermahlen. Man erhält ein Pulver mit einer mittleren Partikelgröße von 40 µm und einem Anteil < 10 µ von < 15 %. Das Pulver weist eine homogene Farbe auf und auch die Pulverkörner sind im wesentlichen einfarbig.

Das Pulver wurde elektrostatisch mit einer Koronapistole auf Aluminiumblech gesprüht und 20 min. bei 180°C eingebrannt. Man erhält eine defektfreie Beschichtung mit Eigenschaften, die sich nicht von einer üblichen Beschichtung unterscheiden. Es entsteht eine einheitlicher Farbton und Farbunterschiede, die aus dem Einsatz der Mischung verschieden gefärbter Feinanteile herrühren, sind nicht erkennbar.

### Vergleichsbeispiel 1

10 kg Feinanteil analog Beispiel 1 werden in einem Bepex Walzenkompaktor mit Tablettierwalzen in Tabletten mit 10 mm Durchmesser und 3 mm Dicke kompaktiert. die angewandte Kraft der Walzen entspricht 4 kN/cm. Die anschließende Mahlung der Tabletten in einer Mühle (Hersteller Hosokava. Typ ACM 2) ergab ein Pulver mit einer mittleren Partikelgröße von < 10 *µ*m. Dieses Pulver verhält sich wie das eingesetzte Feinmaterial und läßt sich nicht in den üblichen Pulverlackverarbeitungsanlagen verarbeiten.

### Beispiel 6

8 kg Feinanteil aus Beispiel 3 werden mit Hilfe eines Zweiwalzenkompaktors der Fa. Alexanderwerk (Typ WP 50N 75) mit einer Preßkraft von 9 kN/cm Walzenbreite und einem Durchsatz von ca. 80 kg/h zu einem mechanisch stabilen, homogenen Strang verpreßt, der mechanisch grob zerkleinert und anschließend in einer Mühle (Hersteller: Hosokava, Typ ACM2) unter den für Pulverlack üblichen Bedingungen vermahlen wurde. Man erhält ein Pulver mit einer mittleren Partikelgröße von 35 *µ*m und einen Anteil < 10 *µ*m von 19 %.

### Beispiel 7

9 kg Feinanteil aus Beispiel 3 werden mit Hilfe eines Zweiwalzenkompaktors der Fa. Alexanderwerk (Typ WP 50N 75) mit einer Preßkraft von 12 kN/cm Walzenbreite und einem Durchsatz von ca. 50 kg/h zu einem mechanisch stabilen, homogenen Strang verpreßt, der mechanisch grob zerkleinert und anschließend in einer Mühle (Hersteller: Hosokava, Typ ACM2) unter den für Pulverlack üblichen Bedingungen vermahlen wurde. Man erhält ein Pulver mit einer mittleren Partikelgröße von 32 *µ*m und einen Anteil < 10 *µ*m von 15 %.

### Vergleichsbeispiel 2

5 kg Feinanteil aus Beispiel 3 werden mit Hilfe eines Zweiwalzenkompaktors der Fa. Alexanderwerk (Typ WP 50N 75) mit einer Preßkraft von 4 kN/cm Walzenbreite und einem Durchsatz von ca. 100 kg/h zu einem mechanisch stabilen, homogenen Strang verpreßt, der mechanisch grob zerkleinert und anschließend in einer Mühle (Hersteller: Hosokava, Typ ACM2) unter den für Pulverlack üblichen Bedingungen vermahlen wurde. Man erhält ein Pulver, daß zu mehr als 40 % aus Partikeln < 10 mm besteht und für den Einsatz als Pulverlack nicht geeignet ist

## Patentansprüche

1. Verfahren zur Aufbereitung von Pulverlackabfällen zu wiederverwendbaren Pulverlacken durch Kompaktieren der Pulverlackabfälle ohne völliges Aufschmeizen zu einem zusammengesinterten Produkt, **dadurch gekennzeichnet. daß** Mischungen verschiedenartiger Pulverlackabfälle oder Mischungen von Pulverlackabfällen mit unterschiedlichen regulären Pulverlacken kompaktiert und die erhaltenen kompaktierten Produkte ohne Extrusionsbehandlung, zu Pulverlacken vermahlen werden.

2. Verfahren nach Anspruch 1, **dadurch gekennzeichnet, daß** das Vermahlen zu einer Partikelgrößenverteilung erfolgt, bei der mindestens 50 Volumenprozent der wiederverwendbaren Pulverlackteilchen eine Partikelgröße von 30 bis 45 *µ*m aufweisen, mit einem Anteil einer Teilchengröße kleiner 10 *µ*m von ≤ 15 %.

3. Verfahren nach Anspruch 1 und 2, **dadurch gekennzeichnet, daß** die Pulverlackabfälle aus der Herstellung von Pulverlacken resultieren und/oder das sie bei der Pulverlackapplikation anfallender Overspray sind.

4. Verfahren nach Anspruch 1 bis 3, **dadurch gekennzeichnet, daß** die Pulverlackabfälle solche sind, die bei der Herstellung von Pulverlacken als zu feinkörnig und/oder zu grobkörnig anfallen.

5. Verfahren nach einem der Ansprüche 1 bis 4, **dadurch gekennzeichnet, daß** gefärbte Pulverlackabfälle mit regulärem Pulverlack einer anderen Färbung gemischt, kompaktiert und zu Pulverlacken vermahlen werden, wobei die Menge der Pulverlackabfälle geringer als die des regulären Pulverlackes ist.

6. Verfahren nach einem der Ansprüche 1 bis 5, **dadurch gekennzeichnet, daß** die Kompaktierung durch Zwei-Walzen- oder Ringwalzenpressen erfolgt wobei die Walzenpressen strukturierte Oberflächen aufweisen können.

7. Verfahren nach einem der Ansprüche 1 bis 6, **dadurch gekennzeichnet, daß** Kompaktiervorrichtungen mit einer spezifischen Preßkraft zwischen 4 kN/cm bis 100 kN/cm verwendet werden.

8. Verfahren nach Anspruch 6, **dadurch gekennzeichnet, daß** die Zwei-Walzen- oder Ringwalzenpressen eine Preßkraft zwischen 5 und 50 kN/cm aufweisen.

9. Verfahren nach einem der Ansprüche 1 bis 8, gekennzeichnet daruch. daß die Korngröße der eingesetzten Pulverlackabfälle bis zu 250 *µ*m beträgt.

10. Verfahren gemäß Anspruch 9, **dadurch gekennzeichnet, daß** Pulverlackabfälle mit einem mittleren Durchmesser < 10 *µ*m kompaktiert werden.

11. Verfahren gemäß Anspruch 1 bis 10, **dadurch gekennzeichnet, daß** Pulverlackreste ähnlicher chemischer Zusammensetzung zuerst vermischt und dann entsprechend dem Verfahren verarbeitet werden.

12. Verfahren gemäß Anspruch 1 bis 10, **dadurch gekennzeichnet, daß** verschiedenfarbige Pulverlackreste zuerst vermischt und dann entsprechend dem Verfahren verarbeitet werden.

13. Verfahren nach einem der vorhergehenden Ansprüche **dadurch gekennzeichnet, daß** die Pulverlackabfälle vor dem Kompaktieren mit einem üblichen Pulverlack vermischt werden.

14. Verfahren gemäß Anspruch 13, **dadurch gekennzeichnet, daß** zu einem üblichen Pulverlack bis zu 10 Gew.-% von anders gefärbten Pulverlackabfällen mit einem mittleren Teilchendurchmesser < 10 *µ*m zugesetzt, gemischt und dann kompaktiert und vermahlen werden.

15. Pulverlackzusammensetzung, erhalten nach dem Verfahren eines der Ansprüche 1 bis 14 aus Pulverlackabfällen durch Kompaktieren und nachgeschaltetes Vermahlen ohne zusätzliches Aufschmelzen.

16. Pulverlackzusammensetzung nach Anspruch 15, erhalten aus einer Mischung von mindestens zwei verschiedenfarbigen Pulverlackabfällen.

17. Pulverlackzusammensetzung entsprechend Anspruch 15, erhalten aus einer Mischung von bis zu 10 Gew.-% eines farbigen Pulverlacks mit einem mittleren Teilchendurchmesser < 10 *µ*m mit einem andersfarbigen üblichen Pulverlack.

18. Pulverlackzusammensetzung gemäß Anspruch 15 bis 17 erhalten aus einer Mischung von mindestens zwei Pulverlackresten unterschiedlicher chemischer Zusammensetzung.

## Claims

1. Method for processing powder coating waste into reusable powder coatings by compacting the powder coating waste without complete fusion into a sintered product, **characterised in that** mixtures of various powder coating wastes or mixtures of powder coating waste and different conventional powder coatings are compacted and the compacted products obtained are ground into powder coatings without extrusion treatment.

2. Method according to claim 1, **characterised in that** grinding takes place to a particle size distribution in which at least 50% by volume of the reusable powder coating particles have a particle size of 30 to 45 µm, with a proportion having a particle size of less than 10 µm of ≤ 15%.

3. Method according to claim 1 and claim 2, **characterised in that** the powder coating waste results from the production of powder coatings and/or is the overspray occurring during powder coating application.

4. Method according to claims 1 to 3, **characterised in that** the powder coating waste is that which occurs during the production of powder coatings as excessively fine particle powder coatings and/or excessively coarse particle powder coatings.

5. Method according to any one of claims 1 to 4, **characterised in that** coloured powder coating waste is mixed with conventional powder coating of a different colour, compacted and ground into powder coatings, the quantity of powder coating waste being less than that of the conventional powder coating.

6. Method according to any one of claims 1 to 5, **characterised in that** compaction takes place by two-roll or ring roll presses, wherein the roll presses can have structured surfaces.

7. Method according to any one of claims 1 to 6, **characterised in that** compacting devices with a specific pressure force between 4 kN/cm and 100 kN/cm are used.

8. Method according to claim 6, **characterised in that** the two-roll or ring roll presses have a pressure force between 5 and 50 kN/cm.

9. Method according to any one of claims 1 to 8, **characterised in that** the particle size of the powder coating waste used is up to 250 µm.

10. Method according to claim 9, **characterised in that** the powder coating waste is compacted with a mean diameter of < 10 µm.

11. Method according to claims 1 to 10, **characterised in that** powder coating residues of similar chemical composition are firstly mixed and then processed according to the method.

12. Method according to claims 1 to 10, **characterised in that** differently coloured powder coating residues are firstly mixed and then processed according to the method.

13. Method according to any one of the preceding claims, **characterised in that** the powder coating waste is mixed with a conventional powder coating before compaction.

14. Method according to claim 13, **characterised in that** up to 10% by weight of differently coloured powder coating waste with a mean particle diameter of < 10 µm are added to a conventional powder coating, mixed and then compacted and ground.

15. Powder coating composition, obtained by the method of one of claims 1 to 14 from powder coating waste by compaction and subsequent grinding without additional fusion.

16. Powder coating composition according to claim 15, obtained from a mixture of at least two differently coloured powder coating wastes.

17. Powder coating composition according to claim 15, obtained from a mixture of up to 10% by weight of a coloured powdered coating with a mean particle diameter of < 10 µm and a differently coloured conventional powder coating.

18. Powder coating composition according to claims 15 to 17, obtained from a mixture of at least two powder coating residues of different chemical composition.

## Revendications

1. Procédé de traitement de déchets de poudres pour revêtement électrostatique en des poudres pour revêtement électrostatique réutilisables, par compactage de déchets de poudre pour revêtement électrostatique en un produit fritté sans fusion totale, **caractérisé en ce que** des mélanges de déchets de poudres pour revêtement électrostatique de natures différentes ou des mélanges de déchets de poudres pour revêtement électrostatique avec différentes poudres pour revêtement électrostatique régulières sont compactés et que les produits compactés obtenus sont moulus en poudres pour revêtement électrostatique sans traitement d'extrusion.

2. Procédé selon la revendication 1, **caractérisé en ce que** la mouture s'effectue en une répartition granulométrique pour laquelle au moins 50 % en volume des particules de poudre pour revêtement électrostatique réutilisables présentent une taille de particule de 30 à 45 µm, avec une proportion d'une taille de particule inférieure à 10 µm de ≤ 15 %.

3. Procédé selon les revendications 1 et 2, **caractérisé en ce que** les déchets de poudre pour revêtement électrostatique résultent de la fabrication des poudres pour revêtement électrostatique et/ou qu'ils sont de la poudre perdue (overspray) obtenue lors de la mise en oeuvre de la poudre pour revêtement électrostatique.

4. Procédé selon les revendications 1 à 3, **caractérisé en ce que** les déchets de poudre pour revêtement électrostatique sont tels que ceux qui, lors de la production de poudres pour revêtement électrostatique, apparaissent comme à grains trop fins ou trop gros.

5. Procédé selon l'une quelconque des revendications 1 à 4, **caractérisé en ce que** des déchets de poudre pour revêtement électrostatique colorés sont mélangés, compactés et moulus en des poudres pour revêtement électrostatique avec de la poudre pour revêtement électrostatique régulière d'une autre teinte, sachant que la quantité des déchets de poudre pour revêtement électrostatique est inférieure à celle de la poudre pour revêtement électrostatique régulière.

6. Procédé selon l'une quelconque des revendications 1 à 5, **caractérisé en ce que** le compactage s'effectue par des presses à deux rouleaux ou des presses à rouleau et anneau, sachant que les presses à rouleaux peuvent comporter une surface structurée.

7. Procédé selon l'une quelconque des revendications 1 à 6, **caractérisé en ce que** l'on utilise des dispositifs de compactage avec une force de pression spécifique comprise entre 4 kN/cm et 100 kN/cm.

8. Procédé selon la revendication 6, **caractérisé en ce que** les presses à deux rouleaux ou les presses à rouleau et anneau présentent une force de pression comprise entre 5 kN/cm et 50 kN/cm.

9. Procédé selon l'une quelconque des revendications 1 à 8, **caractérisé en ce que** la taille des particules des déchets de poudre pour revêtement électrostatique utilisés atteint jusqu'à 250 µm.

10. Procédé selon la revendication 9, **caractérisé en ce que** des déchets de poudre pour revêtement électrostatique d'un diamètre moyen de < 10 µm sont compactés.

11. Procédé selon les revendications 1 à 10, **caractérisé en ce que** des restes de poudres pour revêtement électrostatique de composition chimique similaire sont d'abord mélangés et ensuite traités conformément au procédé.

12. Procédé selon les revendications 1 à 10, **caractérisé en ce que** des restes de poudres pour revêtement électrostatique de couleurs différentes sont d'abord mélangés et ensuite traités conformément au procédé.

13. Procédé selon l'une quelconque des revendications précédentes, **caractérisé en ce que** les déchets de poudre pour revêtement électrostatique sont mélangés à une poudre pour revêtement électrostatique habituelle avant le compactage.

14. Procédé selon la revendication 13, **caractérisé en ce qu'**à une poudre pour revêtement électrostatique habituelle, jusqu'à 10 % en poids de déchets de poudre pour revêtement électrostatique de couleur différente avec un diamètre moyen de particule < 10 µm sont ajoutés, mélangés et ensuite compactés et moulus.

15. Composition de poudre pour revêtement électrostatique obtenue d'après le procédé selon l'une quelconque des revendications 1 à 14 à partir de déchets de poudres pour revêtement électrostatique par compactage et mouture ultérieure sans fusion supplémentaire.

16. Composition de poudre pour revêtement électrostatique selon la revendication 15, obtenue à partir d'un mélange d'au moins deux déchets de poudres pour revêtement électrostatique de natures différentes.

17. Composition de poudre pour revêtement électrostatique selon la revendication 15, obtenue à partir d'un mélange de jusqu'à 10 % en volume d'une poudre pour revêtement électrostatique colorée d'un diamètre moyen de particule < 10 µm avec une poudre pour revêtement électrostatique habituelle d'une autre couleur.

18. Composition de poudre pour revêtement électrostatique selon l'une quelconque des revendications 15 à 17, obtenue à partir d'un mélange d'au moins deux restes de poudres pour revêtement électrostatique de compositions chimiques différentes.
